# FASCICULE DE BREVET EUROPEEN

(11) **EP 0 702 469 B1**
(45) Date de publication et mention de la délivrance du brevet: **13.03.2002**
(21) Numéro de dépôt: 95410101.0
(22) Date de dépôt: 08.09.1995
(51) Int. Cl.: H04L 7/027, H04L 27/00

(54) **Détecteur de séquences d'apprentisssage modulées en sauts de fréquence**
Erkennungsgerät für FSK Trainingsfolgen
Detector for FSK training sequences

(30) Priorité: 14.09.1994 FR 9411213
(43) Date de publication de la demande: 20.03.1996
(73) Titulaire: STMicroelectronics S.A., 92120 Montrouge (FR)
(72) Inventeur: Decrouez, Christelle, 38190 Brignoud (FR)
(74) Mandataire: de Beaumont, Michel

(56) Documents cités:
- EP-A- 0 534 885
- US-A- 5 337 332

## Description

La présente invention concerne le domaine des modulateurs/démodulateurs (modems) numériques et plus particulièrement l'opération de détection de la réception d'une séquence de signaux modulés par saut de fréquence dans un modem. La modulation par saut de fréquence, couramment appelée modulation FSK d'après l'expression anglo-saxonne Frequency Shift Keying, consiste à émettre sur une ligne de transmission une fréquence F0 en correspondance avec un état binaire 0 et une fréquence F1 en correspondance avec un état binaire 1.

L'invention s'applique plus particulièrement à la détection d'une séquence déterminée de signaux modulés par saut de fréquence dans des modems utilisés pour la transmission de télécopies. En effet, de tels modems fonctionnent en mode bidirectionnel à l'alternat (semi-duplex) et sont susceptibles d'émettre et de recevoir des signaux correspondant à deux types de modulation. Une modulation en phase et en amplitude (QAM) d'une porteuse est utilisée pour la transmission des données. Les données à transmettre sont codées sous forme numérique à partir d'un certain nombre de symboles puis transmises sous forme d'échantillons de portions d'une porteuse modulée en phase et en amplitude. Une modulation FSK est utilisée pour échanger des informations sur la communication, en particulier pour accuser réception de chaque page du document transmis par télécopie. La commutation d'une modulation QAM vers une modulation FSK doit donc se produire à chaque fin de page du document transmis par télécopie. Cette commutation est déclenchée par le modem récepteur sur la base d'une détection de fin de transmission de données qui le place en modulation FSK. Côté émetteur, cette commutation s'effectue par une détection de réception d'une séquence déterminée de signaux en modulation FSK transmis par le modem récepteur du document transmis par télécopie.

Cette séquence de signaux est transmise en norme V21 canal 2 et est fixée par les utilisateurs. En général, on prévoit de détecter la séquence de signaux 01111110. Selon la norme V21 canal 2, la vitesse est de 300 bits/s et les fréquences F0 et F1 sont respectivement 1850 Hz et 1650 Hz. L'émission d'une séquence 01111110 revient, à émettre de manière répétitive successivement un signal à la fréquence F0 pendant 3,3 ms, un signal à fréquence F1 pendant 6 fois 3,3 ms puis de nouveau un signal à la fréquence F0 pendant 3,3 ms.

Le modem, côté émission du document, qui reçoit cette séquence de signaux doit pouvoir la reconnaître pour commuter lui-même en modulation FSK.

Plusieurs méthodes ont déjà été proposées pour réaliser cette détection.

Une première méthode consiste à utiliser un démodulateur FSK classique et à identifier la séquence de signaux démodulée. Une telle solution présente l'inconvénient de conduire à réaliser en permanence une démodulation FSK des signaux reçus par le modem et ce même s'il s'agit de signaux modulés en QAM. Cela entraîne que l'on monopolise en permanence du temps de calcul ce qui nuit au débit de transmission des données modulées en QAM. En outre, la réalisation d'un démodulateur FSK particulier conduit à une structure complexe.

Une deuxième méthode consiste à utiliser un filtre passe-bande centré sur la fréquence F1 recevant le signal modulé. On compare le niveau d'énergie en sortie du filtre par rapport à une valeur seuil prédéterminée pour permettre à une machine d'état de considérer que la séquence est reçue si le niveau de sortie du filtre est suffisant pendant une certaine durée. Un inconvénient d'une telle solution est qu'elle entraîne des erreurs de détection car un tel niveau d'énergie peut apparaître dans des séquences de signaux modulés en QAM.

Une variante de cette seconde méthode consiste à utiliser deux filtres passe-bande centrés respectivement sur les fréquences F0 et F1, et à effectuer une comparaison du niveau d'énergie des sorties des filtres entre elles pour détecter la présence d'un signal modulé en FSK. Si elle améliore la détection par rapport à la première variante, cette solution ne permet pas encore une détection fiable de la présence d'une modulation FSK. Des erreurs peuvent subsister en présence d'un signal en modulation QAM, ou de bruit sur la ligne de transmission.

Un autre inconvénient que présentent les deux variantes de cette seconde méthode est lié au temps de réponse des filtres qui est trop important pour permettre de détecter correctement l'apparition de la séquence prédéterminée.

De fait, un filtre passe-bande numérique est classiquement un filtre récursif au moins du deuxième ordre constitué à partir d'intégrateurs, de multiplieurs et d'éléments de retard (registres à décalages). La structure et le comportement d'un filtre de ce type ont été décrits par P.-M. BEAUFILS et M. RAMI dans l'ouvrage "Le filtrage numérique", pages 216 à 224.

Un inconvénient de ce type de filtre est que l'obtention d'un filtre passe-bande étroit qui est nécessaire pour ne pas entraîner de fausses détections, conduit à un filtre lent.

Ce même problème de temps de réponse se retrouve dans les moyens utilisés pour calculer le niveau d'énergie de la sortie du filtre. En effet, de tels calculateurs sont généralement constitués d'un circuit de détermination de valeur absolue et d'un filtre numérique passe-bas récursif du premier ordre à fréquence de coupure nulle.

Le cumul des deux constantes de temps (filtre passe-bande et calculateur d'énergie) est trop important pour respecter la contrainte de délai fixée par la norme. A l'inverse, le respect de cette contrainte de délai entraîne des erreurs de détection par l'élargissement de la bande passante des filtres.

L'invention vise à pallier ces inconvénients en proposant un détecteur d'une séquence de signaux modulés par saut de fréquence qui soit à la fois fiable, rapide et de constitution simple. L'invention vise également à permettre une identification fiable et rapide d'une séquence prédéterminée reçue.

US-A-5 337 332 divulgue un appareil pour reconnaître une séquence de signaux, alternés en modulation de phase, utilisant un filtre coupe-bande. Le dispositif n'est cependant pas utilisé pour une séquence de signaux modulés par saut de fréquence.

Pour atteindre cet objet, la présente invention prévoit un détecteur de présence d'une séquence de signaux modulés par saut de fréquence arrivant sur un modem, qui comporte deux filtres coupe-bande recevant chacun le signal modulé et deux calculateurs d'énergie respectivement associés à chaque filtre coupe-bande, chaque filtre coupe-bande ayant une fréquence de coupure correspondant à une des fréquences de la modulation par saut de fréquence.

Selon un mode de réalisation de l'invention, le détecteur comporte en outre un comparateur, dont chaque entrée reçoit une sortie d'un des calculateurs d'énergie, et qui délivre en sortie un signal à deux états indicateur de la présence d'une des fréquences de modulation.

Selon un mode de réalisation de l'invention, le détecteur est associé à des moyens propres à reconnaître une séquence déterminée de signaux préalablement mémorisée dans le modem.

Selon un mode de réalisation de l'invention, chaque filtre coupe-bande est un filtre numérique non récursif.

Selon un mode de réalisation de l'invention, chaque filtre coupe-bande est un filtre du deuxième ordre à un zéro.

Selon un mode de réalisation de l'invention, les fréquences de coupure des filtres coupe-bande sont respectivement de 1850 Hz et de 1650 Hz.

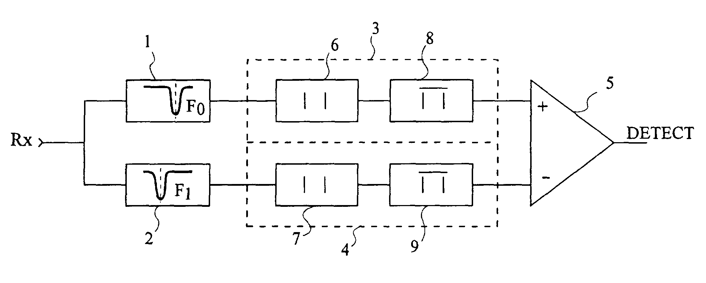

Ces objets, caractéristiques et avantages, ainsi que d'autres de la présente invention seront exposés en détail dans la description suivante d'un mode de réalisation particulier faite à titre non limitatif en relation avec la figure jointe qui représente un mode de réalisation d'un détecteur d'une séquence de signaux modulés en FSK selon l'invention.

Comme le montre la figure, le détecteur selon l'invention comporte deux filtres coupe-bande 1 et 2 sur lesquels est envoyé le signal reçu Rx par le modem après numérisation. La sortie de chaque filtre coupe-bande 1 ou 2 est envoyée sur un calculateur d'énergie, respectivement 3 et 4 dont la sortie est reliée à une entrée d'un comparateur 5.

Chaque calculateur d'énergie 3 ou 4 est classiquement constitué d'un circuit de détermination de valeur absolue, respectivement 6 et 7, et d'un filtre numérique passe-bas récursif du premier ordre à fréquence de coupure nulle, respectivement 8 et 9.

Chaque filtre coupe-bande 1 ou 2 a une fréquence de coupure qui correspond à l'une des fréquence F0 ou F1 de la modulation FSK, soit pour la norme V21, respectivement 1850 Hz et 1650 Hz.

La sortie du comparateur 5 délivre un signal DETECT indicateur de la présence d'une modulation FSK. La sortie du comparateur 5 peut prendre deux états (HAUT, BAS) selon que le niveau de la première entrée est supérieur au niveau de la seconde (HAUT), ou inversement (BAS).

Ainsi à l'apparition de la séquence déterminée, par exemple 01111110, le signal DETECT de sortie du comparateur 5 va reproduire cette séquence si l'on considère que l'état HAUT correspond à un 1 et l'état BAS à un 0.

En présence d'une modulation QAM, ou en présence uniquement de bruit, les niveaux d'entrées du comparateur 5 seront sensiblement les mêmes et le signal de sortie DETECT sera tantôt dans son état BAS, tantôt dans son état HAUT, de manière aléatoire.

Le bruit susceptible de s'ajouter au signal reçu Rx n'est pas gênant dans la mesure où sa contribution est la même sur les niveaux d'énergie des deux entrées du comparateur 5.

L'examen permanent du signal reçu par le détecteur selon l'invention n'est ici pas gênant dans la mesure où il ne requiert pas de calculs importants qui seraient susceptibles de nuire au débit de transmission des données.

Un avantage essentiel de l'emploi de tels filtres coupe-bande 1 et 2 est qu'ils sont aisément réalisables sous la forme de filtres numériques non récursifs possédant une faible constante de temps. Cela n'est pas le cas d'un filtre passe-bande dans la mesure où un filtre non récursif ne comporte que des zéros (fréquences pour lesquelles l'atténuation est infinie). Il faudrait donc multiplier le nombre de cellule du filtre pour entourer la fréquence centrale d'une multitude de zéros (fréquences coupées) dans la mesure où l'on cherche à obtenir une fréquence non coupée déterminée, ce qui conduirait à un temps de propagation très élevé du signal dans le filtre. Par contre, pour un filtre coupe-bande, la fréquence déterminée est précisément une fréquence coupée, donc un zéro.

Au moyen d'un tel dispositif, la présence d'un signal modulé en FSK peut être détectée rapidement et de manière fiable. Ceci permet de faire commuter le modem émetteur du document par télécopie en modulation FSK.

L'identification de la séquence prédéterminée peut être effectuée classiquement une fois que le modem a commuté en modulation FSK, ce qui ne nécessite alors aucun temps de calcul pendant les périodes de transmission en modulation QAM.

Si l'on souhaite néanmoins identifier une séquence de signaux déterminée modulés en FSK par exemple 01111110, avant la commutation du modem en modulation FSK, il suffit de comparer le signal DETECT de sortie du comparateur 5 par rapport à un modèle mémorisé dans le modem.

La constante de temps du détecteur selon l'invention correspond à la constante de temps des filtres coupe-bande 1 et 2 majorée de la constante de temps des calculateurs d'énergie 3 et 4. On peut considérer que seule la constante de temps des calculateurs d'énergie 3 et 4 est importante (celle de leurs filtres passe-bas 8 et 9) pour respecter les contraintes de délai de détection imposées par la norme, la constante de temps des filtres coupe-bande 1 et 2 étant négligeable devant cette dernière.

A titre d'exemple, un filtre coupe-bande non récursif du deuxième ordre permet une bonne précision du filtre tout en respectant les contraintes de la norme V21.

Bien entendu, la présente invention est susceptible de diverses variantes et modifications qui apparaîtront à l'homme de l'art. En particulier, chacun des composants décrits pourra être remplacé par un ou plusieurs éléments remplissant la même fonction.

De plus, alors que certaines des explications précédentes ont été données par soucis de clarté en utilisant un vocabulaire qui correspond parfois à un fonctionnement analogique, il sera clair pour l'homme du métier que tous les éléments du circuit selon la présente invention traitent des signaux numériques et que les constituants du circuit illustrés sous forme matérielle pourront correspondre en pratique à des réalisations logicielles.

En outre, bien que la description qui précède ait fait référence à la détection d'une séquence de signaux modulés en FSK dans un modem de télécopieur, l'invention s'applique à tout type de modem dans lequel on cherche à détecter la réception d'un signal en modulation FSK, ou d'une séquence déterminée de signaux modulés en FSK.

## Revendications

1. Détecteur de présence d'une séquence de signaux modulés par saut de fréquence arrivant sur un modem, **caractérisé en ce qu'**il comporte deux filtres coupe-bande (1, 2) recevant chacun le signal modulé (Rx) et deux calculateurs d'énergie (3, 4) respectivement associés à chaque filtre coupe-bande (1, 2), chaque filtre coupe-bande (1, 2) ayant une fréquence de coupure (F0, F1) correspondant à une des fréquences de la modulation par saut de fréquence.

2. Détecteur de présence de signaux modulés par saut de fréquence selon la revendication 1, **caractérisé en ce qu'**il comporte en outre un comparateur (5), dont chaque entrée reçoit une sortie d'un des calculateurs d'énergie (3, 4), et qui délivre en sortie un signal (DETECT) à deux états (HAUT, BAS) indicateur de la présence d'une des fréquences de modulation.

3. Détecteur de présence de signaux modulés par saut de fréquence selon la revendication 1 ou 2, **caractérisé en ce qu'**il est associé à des moyens propres à reconnaître une séquence déterminée de signaux préalablement mémorisée dans le modem.

4. Détecteur de présence de signaux modulés par saut de fréquence selon l'une quelconque des revendications 1 à 3, **caractérisé en ce que** chaque filtre coupe-bande (1, 2) est un filtre numérique non récursif.

5. Détecteur de présence de signaux modulés par saut de fréquence selon la revendication 4, **caractérisé en ce que** chaque filtre coupe-bande (1, 2) est un filtre du deuxième ordre à un zéro.

6. Détecteur de présence de signaux modulés par saut de fréquence selon l'une quelconque des revendications 1 à 5, **caractérisé en ce que** les fréquences de coupure (F0, F1) des filtres coupe-bande (1, 2) sont respectivement de 1850 Hz et de 1650 Hz.

## Patentansprüche

1. Detektor für das Vorliegen einer an einem Modem eintreffenden Sequenz von nach dem Frequenzumtast- bzw. FSK-(Frequency Shift Keying -) verfahren modulierten Signalen, **dadurch gekennzeichnet daß** der Detektor zwei Kerbfilter (1, 2), deren jedes jeweils das modulierte Signal (Rx) zugeführt erhält, sowie zwei Energieberechnungs-Schaltungen (3, 4) jeweils in Zuordnung zu jedem Kerbfilter aufweist, wobei jedes Kerbfilter (1, 2) jeweils eine kritische bzw. Grenzfrequenz (F0, F1) entsprechend einer der Umtast-Frequenzen der Frequenzumtast- bzw. FSK-Modulation aufweist.

2. Detektor für das vorliegen von nach dem Frequenzumtast- bzw. FSK-System modulierten Signalen, nach Anspruch 1, **dadurch gekennzeichnet, daß** der Detektor des weiteren einen Komparator (5) aufweist, der an jedem seiner Eingänge eine Ausgangsgröße einer der Energieberechnungs-Schaltungen zugeführt erhält, und der an seinem Ausgang ein Signal (DETECT) mit zwei Zuständen (HAUT/HOCH, BAS/NIEDRIG) als Anzeige für das vorliegen einer der Modulationsfrequenzen liefert.

3. Detektor für das Vorliegen von nach dem Frequenzumtast- bzw. FSK-System modulierten Signalen, nach Anspruch 1 oder 2, **dadurch gekennzeichnet, daß** der Detektor Mitteln zur Erkennung einer bestimmten zuvor in dem Modem gespeicherten Signalfolge zugeordnet ist.

4. Detektor für das Vorliegen von nach dem Frequenzumtast- bzw. FSK - System modulierten Signalen, nach einem der Ansprüche 1 bis 3, **dadurch gekennzeichnet, daß** jedes Kerbfilter (1, 2) jeweils ein digitales nicht-rekursives Filter ist.

5. Detektor für das Vorliegen von nach dem Frequenzumtast- bzw. FSK- System modulierten Signalen, nach Anspruch 4, **dadurch gekennzeichnet, daß** jedes Kerbfilter (1, 2) jeweils ein Filter zweiter Ordnung mit einer Null ist.

6. Detektor für das Vorliegen von nach dem Frequenzumtast- bzw. FSK- System modulierten Signalen, nach einem der Ansprüche 1 bis 5, **dadurch gekennzeichnet, daß** die kritischen bzw. Grenzfrequenzen (F0, F1) der Kerbfilter (1, 2) 1850 Hz bzw.1650 Hz betragen.

## Claims

1. A detector of the presence of a sequence of signals modulated by frequency shift keying arriving on a modem, **characterized in that** it comprises two notch filters (1, 2), each of them receiving the modulated signal (Rx), and two energy calculation circuits (3, 4) respectively associated with each notch filter (1, 2), each notch filter (1, 2) having a cut-off frequency (F0, F1) corresponding to one of the frequencies of the frequency shift keying modulation.

2. A detector of the presence of signals modulated by frequency shift keying according to claim 1, **characterized in that** it further includes a comparator (5), each input of which receives an output of one of the energy calculation circuits (3, 4), and which issues as an output a two-state (HIGH, LOW) signal (DETECT) indicating the presence of one of the modulation frequencies.

3. A detector of the presence of signals modulated by frequency shift keying according to claim 1 or 2, **characterized in that** it is associated with means capable of recognizing a determined sequence of signals previously stored in the modem.

4. A detector of the presence of signals modulated by frequency shift keying according to any of claims 1 to 3, **characterized in that** each notch filter (1, 2) is a digital non-recursive filter.

5. A detector of the presence of signals modulated by frequency shift keying according to claim 4, **characterized in that** each notch filter (1, 2) is a second order filter with one zero.

6. A detector of the presence of signals modulated by frequency shift keying according to any of claims 1 to 5, **characterized in that** the cut-off frequencies (F0, F1) of the notch filters (1, 2) are respectively 1850 Hz and 1650 Hz.
